# EUROPÄISCHE PATENTANMELDUNG

(11) **EP 1 070 650 A2**
(43) Veröffentlichungstag der Anmeldung: **24.01.2001**
(21) Anmeldenummer: 00114013.6
(22) Anmeldetag: 04.07.2000
(51) Int. Cl.: B62D 1/10

(54) **Baugruppe aus einer Lenkwelle und einem Lenkrad**

(30) Priorität: 21.07.1999 DE 29912741 U
(71) Anmelder: TRW Automotive Safety Systems GmbH & Co. KG, 63743 Aschaffenburg (DE)
(72) Erfinder: Hirzmann, Guido, 63877 Sailauf (DE)
(74) Vertreter: Sties, Jochen, Dipl.-Ing.

(57) **Zusammenfassung**

Die Erfindung betrifft eine Baugruppe aus einer Lenkwelle (10) und einem an dieser befestigten Lenkrad (20), wobei die Lenkwelle an ihrem dem Lenkrad zugeordneten Ende mit einer Nut (14) versehen ist. Das Lenkrad ist mit einem Halteteil (28) versehen, das in die Nut (14) eingreifen kann, um das Lenkrad an der Lenkwelle in axialer Richtung zu befestigen. Die Baugruppe ist dadurch gekennzeichnet, daß das Halteteil (28) zwischen einer Freigabestellung, in der es nicht in die Nut (14) eingreift, und einer Haltestellung verschiebbar ist, in der es in die Nut eingreift. Es ist ein Blockierteil (42) vorgesehen, welches das Halteteil in der Freigabestellung halten kann, und ein Anzeigeteil (50), das mit dem Halteteil verbunden ist und von außerhalb des Lenkrades erkennen läßt, ob sich das Halteteil in seiner Haltestellung befindet.

## Beschreibung

Die Erfindung betrifft eine Baugruppe aus einem Lenkrad und einem an dieser befestigten Lenkrad, wobei die Lenkwelle an ihrem dem Lenkrad zugeordneten Ende mit einer Nut versehen ist und wobei das Lenkrad mit einem Halteteil versehen ist, das in die Nut eingreifen kann, um das Lenkrad an der Lenkwelle in axialer Richtung zu befestigen.

Das Halteteil kann nach Art eines Schnappriegels ausgeführt sein, der beim Aufsetzen des Lenkrades auf die Lenkwelle automatisch in die Nut einschnappt. Das Problem besteht dann darin zu erkennen, ob das Halteteil tatsächlich vorschriftsmäßig in der Nut angeordnet ist, so daß das Lenkrad zuverlässig an der Lenkwelle befestigt ist, oder ob sich das Halteteil lediglich in einer Zwischenstellung befindet, in der das Lenkrad zwar zunächst scheinbar fest auf der Lenkwelle sitzt, sich jedoch beim späteren Betrieb plötzlich lösen kann.

Der Erfindung liegt die Aufgabe zugrunde, eine Baugruppe der eingangs genannten Art dahingehend weiterzuentwickeln, daß zuverlässig erkannt werden kann, ob das Halteteil vorschriftsmäßig in der Nut angeordnet ist, wenn das Lenkrad auf die Lenkwelle aufgesetzt ist.

Zu diesem Zweck ist gemäß der Erfindung bei einer Baugruppe der eingangs genannten Art vorgesehen, daß das Halteteil zwischen einer Freigabestellung, in der es nicht in die Nut eingreift, und einer Haltestellung verschiebbar ist, in der es in die Nut eingreift, daß ein Blockierteil vorgesehen ist, welches das Halteteil in der Freigabestellung halten kann, und daß ein Anzeigeteil vorgesehen ist, das mit dem Halteteil verbunden ist und von außerhalb des Lenkrades erkennen läßt, ob sich das Halteteil in seiner Haltestellung befindet. Es ist somit nach dem Aufsetzen des Lenkrades nicht mehr erforderlich, Zugang zum Inneren des Lenkrades zu haben, um zu erkennen, ob das Halteteil das Lenkrad vorschriftsmäßig an der Lenkwelle festlegt. Es ist weiterhin auch beim Aufsetzen des Lenkrades auf die Lenkwelle nicht mehr erforderlich, Zugang zum Inneren des Lenkrades zu haben, da bei geeigneter Ausgestaltung des Blockierteils und des Halteteils ein automatisches Einrasten des Halteteils in die Nut an der Lenkwelle möglich ist. Dieses Einrasten kann dann mittels des Anzeigeteils kontrolliert werden.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einer abgebrochenen Schnittansicht eine erfindungsgemäße Baugruppe in einem ersten Zustand;
- Figur 2 die Baugruppe von Figur 1 in einer Draufsicht;
- Figur 3 in einer Ansicht entsprechend derjenigen von Figur 1 eine erfindungsgemäße Baugruppe in einem zweiten Zustand; und
- Figur 4 in einer Ansicht entsprechend derjenigen von Figur 2 die Baugruppe von Figur 3.

Die erfindungsgemäße Baugruppe besteht aus einer Lenkwelle 10 und einem mit dieser verbindbaren Lenkrad 20.

Die Lenkwelle 10 weist eine Längsachse L und einen mit verringertem Durchmesser ausgeführten Abschnitt 12 auf, der auf seiner Außenseite mit einer Kerbverzahnung versehen ist. An den Abschnitt 12 schließt sich eine Umfangsnut 14 an, so daß in diesem Bereich ein nochmals verringerter Durchmesser vorliegt. An die Nut 14 schließt sich dann ein Kopf 16 an, dessen Außendurchmesser etwas geringer als der innere Durchmesser des Abschnittes 12, aber größer als der Innendurchmesser der Nut ist und der kegelförmig zuläuft. Am Übergang zwischen der Lenkwelle 10 und dem Abschnitt 12 ist eine Tellerfeder 18 angeordnet. Alternativ kann auch ein Gummipuffer 19 vorgesehen sein.

Das Lenkrad 20 weist ein Skelett 22 auf, das eine tragende Funktion hat, sowie einen Korpus 24. Dieser besteht beispielsweise aus einem Kunststoffmaterial und umgibt das Lenkradskelett 22. Im Inneren des Korpus 24 sind sämtliche Funktionsteile des Lenkrades so angeordnet, daß sie von außen nicht sichtbar und gegen äußere Einflüsse geschützt sind.

Im Skelett 22 ist eine Aufnahmeöffnung 26 ausgebildet, die mit einer zur Kerbverzahnung des Abschnittes 12 der Lenkwelle komplementären Kerbverzahnung versehen ist. Die Öffnung 26 dient zur Aufnahme des Abschnittes 12 der Lenkwelle, wobei die beiden Kerbverzahnungen dazu dienen, die Lenkwelle und das Lenkrad drehfest miteinander zu verbinden.

Am Skelett 22 ist ein Halteteil 28 vorgesehen, das hier als Schieber ausgebildet ist. Der Schieber 28 weist einen Randabschnitt 30 auf, der dafür vorgesehen ist, in die Nut 14 einzugreifen, sowie ein Langloch 32, durch das hindurch sich eine Befestigungsschraube 34 erstreckt.

Am Schieber 28 ist weiterhin eine Führungsbuchse 36 vorgesehen, die sich in bezüglich der Mittelachse der Öffnung 26 radialer Richtung erstreckt. Die Führungsbuchse 36 ist in eine Bohrung am Schieber 28 eingesetzt und dort mit dem Schieber fest verbunden. Im Inneren der Führungsbuchse 36 ist ein Innengewinde 38 vorgesehen, dessen Funktion später erläutert wird.

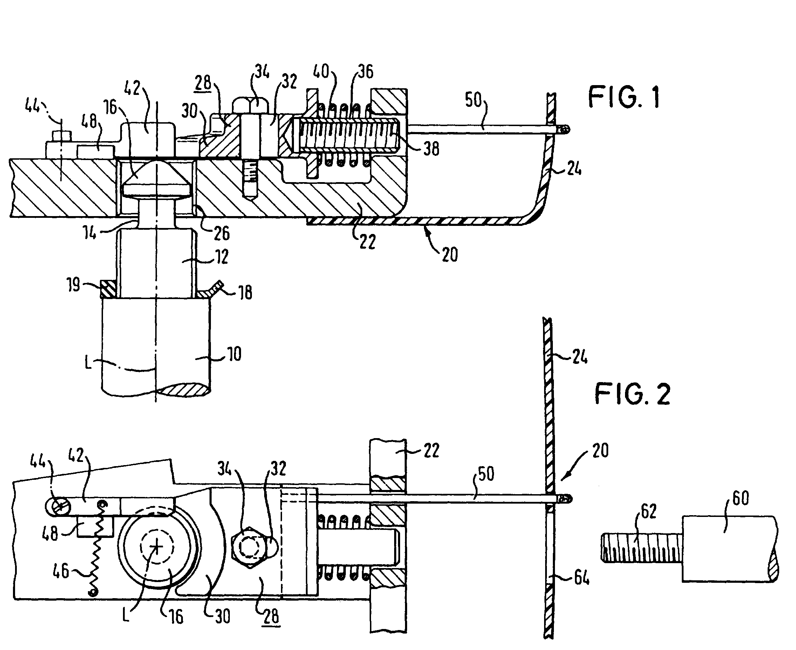

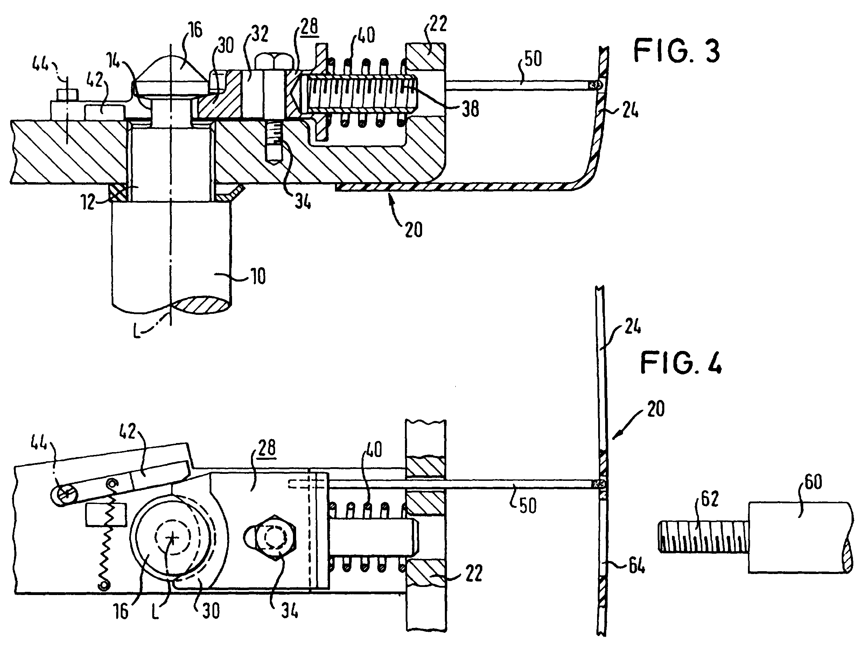

Am Schieber 28 Stützt sich mit einem Ende eine Druckfeder 40 ab, welche die Führungsbuchse 36 konzentrisch umgibt und mit ihrem anderen Ende am Skelett 22 anliegt. Die Druckfeder 40 beaufschlagt den Schieber 28 aus der in den Figuren 1 und 2 gezeigten Freigabestellung in die in den Figuren 3 und 4 gezeigte Haltestellung.

Am Skelett 22 ist ferner ein Blockierteil 42 angebracht, das um eine Achse 44 schwenkbar ist. Am Blockierteil 42 greift eine Zugfeder 46 an, die das Blockierteil in Anlage an einen Anschlag 48 beaufschlagt. In dieser Stellung, in der das von der Achse 44 abgewandte Ende des Blockierteils geringfügig in die Öffnung 26 hineinragt, liegt der Schieber 28 an dem Blockierteil an, so daß er von der Druckfeder 40 nicht aus der Freigabestellung in die Haltestellung verschoben werden kann.

Am Schieber 28 ist schließlich ein Anzeigeteil 50 vorgesehen, das hier als Stift ausgebildet ist. Ein Ende des Stiftes ist direkt mit dem Schieber 28 verbunden, und das andere Ende steht aus dem Korpus 20 durch eine Durchtrittsöffnung geringfügig hervor. Das hervorstehende Ende ist farbig gekennzeichnet, so daß es besser sichtbar ist.

Die Befestigung des Lenkrades 20 an der Lenkwelle 10 geschieht in der folgenden Weise: Wenn das Lenkrad auf die Lenkwelle 10 aufgesetzt wird, wird das Blockierteil 42 von dem Kopf 16 der Lenkwelle 10 entgegen der Wirkung der Zugfeder 46 von der Achse L weg nach außen gedrückt. Dies führt dazu, daß der Schieber 28 nicht mehr vom Blockierteil gehalten wird; der Schieber 28 liegt aber mit seinem Rand 30 am Umfang des Kopfes 16 an. Erst wenn die Lenkwelle 10 weit genug in das Lenkradskelett 22 hineingeschoben ist, kann der Rand 30 des Schiebers 28 in die Nut 14 eintreten, und der Schieber 28 wird dann von der Druckfeder 40 aus der in den Figuren 1 und 2 gezeigten Stellung in die in den Figuren 3 und 4 gezeigte Stellung verschoben. In der dann vom Schieber 28 eingenommenen Haltestellung ist das Lenkrad 20 in axialer Richtung an der Lenkwelle 10 befestigt. Da die Flächen des Randes 30 und der Nut 14, die miteinander zusammenwirken, geringfügig schräg ausgebildet sind, ergibt sich eine Keilwirkung, die zusammen mit der Tellerfeder 18 bzw. dem Gummipuffer 19 dazu führt, daß jegliches Spiel zwischen Lenkrad und Lenkwelle beseitigt ist.

Wenn sich der Schieber 28 aus seiner Freigabestellung in seine Haltestellung verstellt, wird der Stift 50 mitgenommen. Dadurch wird das farblich markierte Ende des Stiftes in das Lenkrad zurückgezogen, so daß es etwa bündig mit der Außenfläche des Korpus 24 abschließt. Dies ist optisch leicht zu erkennen und liefert dem Monteur des Lenkrades die Gewißheit, daß sich das Halteteil vorschriftsmäßig in der Haltestellung befindet; anderenfalls würde das farblich gekennzeichnete Ende des Stiftes 50 über die Außenfläche des Lenkrades hervorstehen.

Da das mit dem Schieber 28 zusammenwirkende Ende des Blockierteils 42 mit einer entlang der Längsachse L gemessenen Dicke ausgeführt ist, die größer ist als die Dicke des Randes 30 und auch größer als die Breite der Nut 14, kann das Blockierteil 42, wenn das Lenkrad auf die Lenkwelle 10 aufgesetzt ist, nicht in die Nut 14 eingreifen, in der es ein späteres Abnehmen des Lenkrades von der Lenkwelle behindern würde.

Wenn das Lenkrad wieder von der Lenkwelle abgenommen werden soll, wird ein schematisch gezeigtes Werkzeug 60, das mit einem zum Innengewinde 38 komplementären Außengewinde 62 versehen ist, durch eine Öffnung 64 im Korpus 24 eingeführt und in das Innengewinde 38 eingeschraubt. Anschließend kann der Schieber 28 mittels des Werkzeugs 60 aus der Haltestellung wieder in die Freigabestellung gezogen werden. Dabei wird, nachdem die Lenkwelle 10 aus dem Lenkrad herausgezogen ist, das Blockierteil 42 wieder in seine in den Figuren 1 und 2 gezeigte Ausgangsstellung zurückschnappen, in der es den Schieber 28 in der Freigabestellung blockiert.

## Patentansprüche

1. Baugruppe aus einer Lenkwelle (10) und einem an dieser befestigten Lenkrad (20), wobei die Lenkwelle an ihrem dem Lenkrad zugeordneten Ende mit einer Nut (14) versehen ist und wobei das Lenkrad mit einem Halteteil (28) versehen ist, das in die Nut (14) eingreifen kann, um das Lenkrad an der Lenkwelle in axialer Richtung zu befestigen,
dadurch gekennzeichnet, daß das Halteteil (28) zwischen einer Freigabestellung, in der es nicht in die Nut (14) eingreift, und einer Haltestellung verschiebbar ist, in der es in die Nut eingreift, daß ein Blockierteil (42) vorgesehen ist, welches das Halteteil in der Freigabestellung halten kann, und daß ein Anzeigeteil (50) vorgesehen ist, das mit dem Halteteil verbunden ist und von außerhalb des Lenkrades erkennen läßt, ob sich das Halteteil in seiner Haltestellung befindet.

2. Baugruppe nach Anspruch 1, dadurch gekennzeichnet, daß das Anzeigeteil ein Stift (50) ist, der mit einem Ende mit dem Halteteil verbunden ist und dessen anderes Ende von außerhalb des Lenkrades sichtbar ist.

3. Baugruppe nach Anspruch 2, dadurch gekennzeichnet, daß das sichtbare Ende des Stiftes aus dem Lenkrad (20) hervorsteht, wenn sich das Halteteil in seiner Freigabestellung befindet, und bündig mit dem Lenkrad abschließt, wenn sich das Halteteil in seiner Haltestellung befindet.

4. Baugruppe nach einem der vorhergehenden Ansprüche, dadurch gekennzeichnet, daß am Halteteil eine Rückzugsbohrung (38) vorgesehen ist, in die ein Werkzeug (60) eingeschraubt werden kann, mittels dem das Halteteil in seine Freigabestellung gebracht werden kann.

5. Baugruppe nach einem der vorhergehenden Ansprüche, dadurch gekennzeichnet, daß der in die Nut (14) eingreifende Teil (30) des Halteteils (28) eine geringere Höhe hat als der mit dem Halteteil zusammenwirkende Teil des Blockierteils (42).
